# EUROPEAN PATENT SPECIFICATION

(11) **EP 2 402 786 B1**
(45) Date of publication and mention of the grant of the patent: **17.02.2016**
(21) Application number: 10167611.2
(22) Date of filing: 29.06.2010
(51) Int. Cl.: G01S 19/30, G01S 19/34

(54) **Method and device for synchronization of signals**
Verfahren und Vorrichtung zur Synchronisation von Signalen
Procédé et dispositif pour la synchronisation de signaux

(43) Date of publication of application: 04.01.2012
(73) Proprietor: u-blox AG, 8800 Thalwil (CH)
(72) Inventor: Jokitalo, Timo, 01510, Vantaa (FI); Söderholm, Stefan, 01510, Vantaa (FI)
(74) Representative: Boco IP Oy Ab

(56) References cited:
- US-A1- 2006 227 046

## Description

### FIELD OF THE INVENTION

The present invention relates to a code editing method for synchronization of signals. The invention also relates to a device and system which are able to carry out the code editing method.

### BACKGROUND OF THE INVENTION

Signals transmitted from Global Navigation Satellite System (GNSS) satellites consist of a carrier frequency modulated by a pseudo-random noise (PRN) code that is unique to each satellite.

All the satellites transmit at the same carrier frequency, but due to the high velocity of the satellites the signals will experience a Doppler shift in frequency before reaching the GNSS receiver. The Doppler shift can be several kHz in magnitude.

The pseudo-random noise (PRN) code sequence is 1023 units or chips long and repeats itself continuously. The code phase at the receiver at any given time is dependent on the distance between the receiver and the satellite.

There are several ways of acquiring signals from GNSS satellites. All these methods rely on the effect of autocorrelation, wherein a GNSS receiver will generate exact replicas of a carrier frequency and pseudo-random noise code and multiply these replicas with the incoming signal. If the carrier frequency and code phase of the generated signals match the ones in the incoming signal, it will produce maximum correlation power and the resulting mixed signal is easily detectable. Acquired signals are relatively easy to follow because the Doppler shift and the code phase are changing slowly. This enables RF parts of the receiver to be shut down for short periods of time between taking samples of the incoming signal.

European patent application EP 1 586 916 A1 discloses an apparatus and a method for receiving GPS signals. The method comprises steps for receiving GPS signals from satellites, digitizing said signals to sampled signals, storing said sampled signals in a memory and processing said samples to obtain position information. When 100-1000 ms of satellite signal is received, RF to IF converter and A/D converter are powered down to save energy and will be powered again when new position data is needed. On the other hand, the disclosed apparatus comprises also a digital signal processor for processing sampled signals from memory. Furthermore, positioning is not continuous with the disclosed method.

US patent 5,650,785 discloses a low power GPS receiver comprising an on/off modulator. A microprocessor in the disclosed GPS receiver determines a duty cycle factor that reduces signal strength without inhibiting a valid location fix. Said duty cycle factor is then used in the on/off modulator to RF section power control. The RF section must be powered from 4% to 100% of the time, depending on the signal strength. In other words, power saving is possible only when the signal strength is strong.

US patent 6,812,887 discloses a method and an apparatus for saving power in a GPS receiver. Power saving is based on similar duty cycle factor as in US 5,650,785. A number of solutions for receiver's state of motion are calculated each time the receiver is positioned and those solutions are used to predict the state of motion. The duty cycle factor is based on success of previous solutions and most significant power saving is achieved when velocity is constant. This method seems to lead to inaccurate positioning or normal power consumption when the receiver moves randomly.

US patent publication US2006/227046 discloses a method intended to allow a quicker acquisition of the SV C/A code. In the method , the integration period is arranged to be shorter than the natural period of the pseudorandom code sequence by means of an external periodical trigger INT_ACC. On detection of an external periodical trigger INT_ACC, the local pseudorandom code generators are slewed periodically, and the correlation data are dumped simultaneously to all processing modules in output registers for acquisition and tracking software.

### SUMMARY OF THE INVENTION

First aspect of the present invention is a code editing method for synchronizing coded channels in a periodic signal. The method comprises steps of determining time-shifts between said periodic signal and each code word in a set of code words, dividing the code words into a certain first part and to a certain second part, and forming new code words by interchanging said first parts and said second parts of each code word based on the determined time-shifts so that said new code words are arranged to have essentially the same phase as the corresponding channels in the periodic signal.

In an embodiment of the first aspect of the invention the method comprises a step of mixing said periodic signal to IF frequency. In an embodiment of the invention said IF frequency is substantially 0 Hz.

In an embodiment of the first aspect of the invention said periodic signal is a code division multiple access spread spectrum signal.

In an embodiment of the first aspect of the invention the method comprises a step of correlating said periodic signal with said new code words.

In an embodiment of the first aspect of the invention said periodic signal is received and/or processed at certain intervals. In an embodiment said interval is at least one about 1 millisecond interval every 20 milliseconds when determining time-shifts between the periodic signal and each code word in the set of code words, and less than that after said time-shifts have been determined.

Second aspect of the present invention is a device for synchronizing signals, the device having means for receiving a first coded signal and memory means. The device is characterized in that said device is arranged to store multiple code words in memory means, determine time-shifts between said first coded signal and at least one of said multiple code words, divide each of said code words into a certain first parts and to a certain second parts, form new code words by interchanging said first parts and said second parts based on the determined time-shifts so that said new code words are arranged to have essentially the same phase as the corresponding codes in the first coded signal.

In an embodiment of the second aspect of the invention the device comprises a mixer to mix said first CDMA signal to IF frequency of substantially 0 Hz.

In an embodiment of the second aspect of the invention said receiving means are only operational at certain intervals. In an embodiment said interval is at least one about 1 millisecond interval every 20 milliseconds.

In an embodiment of the second aspect of the invention the device is arranged to correlate said first coded signal with said new code words.

In an embodiment of the second aspect of the invention said first coded signal is a code division multiple access spread spectrum signal.

Third aspect of the present invention is a positioning system comprising the device of the second aspect of the invention.

### BRIEF DESCRIPTION OF DRAWINGS

In the following the invention will be described in more detail by referring to the figures which in illustrative manner show non-restrictive examples on preferred embodiments of the invention.
Fig. 1 illustrates an example of an incoming signal,
Fig. 2 illustrates an example of code words,
Fig. 3 illustrates an example of dividing of the code words,
Fig. 4 illustrates an example of formed new code words, and
Fig .5 illustrates an example of a software GPS receiver.

### DETAILED DESCRIPTION

GPS signals are used as example in the following, but without any intention to limit the preferred embodiments only to mere GPS system compatibility, in describing preferred embodiments of the invention.

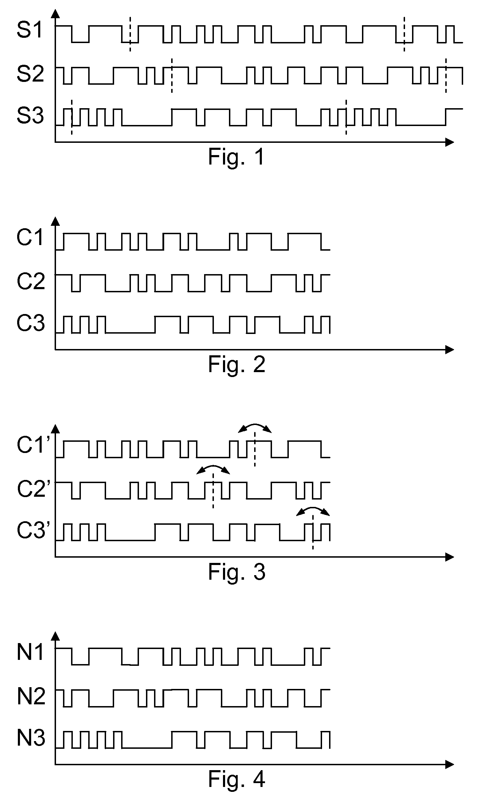

Figure 1 illustrates an example of an incoming signal which comprises three different coded signals S1, S2 and S3. The incoming signal may be for example a code division multiple access (CDMA) spread spectrum signal which comprises multiple coded signals. The signals S1, S2 and S3 are periodic and the signals may have different time-shifts. Dashed lines in figure 1 represent the time-shifts and one complete period of the code is shown between two dashed lines.

Figure 2 illustrates an example of code words C1, C2 and C3 which are present in the incoming signal of figure 1. In figure 3 these code words C1', C2' and C3' are divided to two parts and dividing points are presented with dashed lines. The dividing point of a code word C1', C2' and C3' depends on the code phase of the corresponding coded signal S1, S2 and S3 in the incoming signal. The dividing points are chosen so that new code words formed by interchanging first and second parts for each of the code words will result the same code phase for all the code words in the incoming signal.

The result of the division of the code words shown in figure 3 can be seen in figure 4 in which the new code words N1, N2 and N3 are illustrated. The new code words are now in the same phase as the coded signals in the incoming signal. This can be easily seen by comparing figures 1 and 4.

Zeroing of the phase shifts between the phase shift between code words and coded signals makes it possible to shutdown RF parts of the receiver for a longer period of time compared to normal situation with random phase shifts. For example in GPS system the PRN code sequence is 1023 chips long which means that the RF needs to receive only 1023 chips to achieve maximum correlation for all the signals. Even shorter sample might be sufficient to detect the signals because it is now known which part of the code word is received.

In GPS system satellites transmit information at a rate of 50 bits per second using phase shift keying (PSK) modulation. Each information bit consists of 20 consecutive code words of 1023 chips each which means that one code word equals to one millisecond in time. All the available information in the incoming signal can therefore be received reliably if about one millisecond of the incoming signal is received every 20 milliseconds which means about 95% power saving in the RF parts. The precise receiving time depends on strength of the incoming signal. With a strong signal even half a code word may be sufficient to receive the information of the incoming signal.

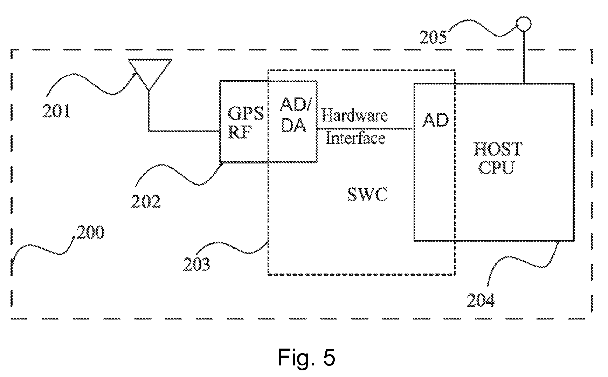

Fig 5 illustrates as an example a software GPS module 200 that can be integrated to various kinds of devices. In the example in figure 5, the module 200 comprises a host CPU for making the module adaptation easier. However, in an optional preferred embodiment of the invention the module 200 can be provided without the CPU 204 within the provision that the host devise comprises the CPU capacity for the use. The memory for saving and storing the data and the program to be executed in the HOST CPU 204 are not shown, although may be needed in a mere stand-alone device if no other memory device is available in the host device. The Host CPU can be connected in a preferred embodiment to GPS receiver via an interface there between. In a preferred embodiment there can be an Analog to Digital conversion with an AD device for the purpose, at one side of the interface there between the Host CPU and the GPS RF-module, especially in such preferred embodiments in which the RF-module gives analog signal out, for input to the Host CPU. A preferred embodiment that needs an A/D conversion there between is demonstrated by showing the AD at the interface boundary at the HOST CPU and GPS-receiver both sides, having although no intention to limit the location to mere to the shown way of AD or DA. In one preferred embodiment the just mentioned interface operates in an analog mode, so that there will be at least one AD or DA conversion between the Host CPU and the GPS-RF-module for such variant, and the Software Correlator (SWC) 203 in such a variant is arranged to operate in a corresponding way. Depending on the intelligence present in the GPS-RF module, some operations of the SWC 203 can be embodied to be performed therein. However, in an embodiment of the invention, the whole SWC can be arranged to reside in the GPS-RF.

Neither there are shown not more than the symbolic connector 205 as interface to couple the CPU 204 to further devices outside the module 200. The connector 205 symbolizes the functionality to be delivered via the terminal 205 to the devices that belong to the arrangement according to a preferred embodiment of the invention. However, the module 200 is configured so that it could be used in several kinds of devices to form an arrangement according to a preferred embodiment of the invention, and according to a preferred embodiment thus has an interface 205 to be utilized for the coupling of the module 200 to a device. As there can be several kinds of devices, the interface 205 can be selected accordingly to each in appropriately in question. The linking interface 205 can be implemented wirelessly, but also optionally in suitable part via galvanic connection to the host device. In a preferred embodiment, the interface 205 can be used as interface also for data transference between the devices, or a part of a single device.

The Fig 5 shows receiving means 201 being coupled to an RF-receiver 202 arranged to receive at least GPS-system signals for location determination, but is not necessary limited only to mere GPS. The receiving means can be suitable for many frequency ranges and implemented by an antenna, connector or some other suitable interface for receiving RF-signals. The receiver preferably comprises an IQ-demodulator for producing in-phase and quadrature phase signals from an incoming signal. Preferably the incoming signal is mixed down to intermediate frequency before or after the IQ-demodulator. The intermediate frequency is preferably around zero. The receiver 202 is coupled via Hardware Interface to the HOST CPU 204.

To a person skilled in the art, the foregoing exemplary embodiments illustrate the model presented in this application whereby it is possible to design different methods and arrangements, which in obvious ways to the expert, utilize the inventive idea presented in this application.

## Claims

1. A code editing method for synchronizing coded channels (S1, S2, S3) in a periodic signal in a receiver, wherein the periodic signal comprises code words of the coded channels (S1, S2, S3), the method comprising:
- storing replicas of code words of the coded channels (S1, S2, S3),
- using the replicas to determine time-shifts between said periodic signal and each received code word in a set of code words (C1, C2, C3), **characterized by**
- dividing the code words based on the determined time-shifts into a first part and a second part, and
- forming new code words (N1, N2, N3) by interchanging said first part and said second part of each code word so that each new code word has the same phase as the corresponding channel in the periodic signal.

2. The method of claim 1, **characterized by** a step of mixing said periodic signal to an IF frequency.

3. The method of claim 2, **characterized in that** the IF frequency is 0 Hz.

4. The method of claim 1, **characterized in that** said periodic signal is a code division multiple access spread spectrum signal.

5. The method of claim 1, **characterized by** a step of correlating said periodic signal with said new code words.

6. The method of claim 1, **characterized in that** said periodic signal is received and/or processed at intervals.

7. The method of claim 6, **characterized in that** said interval is at least one millisecond interval every 20 milliseconds when determining time-shifts between the periodic signal and each code word in the set of code words, and less than one millisecond after said time-shifts have been determined.

8. A device for synchronizing coded channels (S1, S2, S3), the device having means for receiving a coded signal comprising the coded channels (S1, S2, S3) and memory means, said device being arranged to store multiple code words (C1, C2, C3) in memory means, and determine time-shifts between said coded signal and said multiple code words, **characterized in that** said device is arranged to divide each of said code words based on the determined time-shifts into a first part and a second part, and form new code words (N1, N2, N3) by interchanging said first part and said second part so that each new code word has the same phase as the corresponding code in the coded signal.

9. The device of claim 8, wherein the device comprises a mixer to mix said coded signal to IF frequency of 0 Hz.

10. The device of claim 8, wherein said receiving means are only operational at intervals.

11. The device of claim 10, wherein said interval is at least one millisecond interval every 20 milliseconds when determining time-shifts between the periodic signal and each code word in the set of code words, and less than one millisecond after said time-shifts have been determined.

12. The device of claim 8, wherein the device is arranged to correlate said coded signal with said new code words.

13. A positioning system comprising the device of claim 8.

## Patentansprüche

1. Verfahren zur Aufbereitung eines Codes zur Synchronisierung von codierten Kanälen (S1, S2, S3) in einem periodischen Signal in einem Empfänger, wobei das periodische Signal Codewörter der codierten Kanäle (S1, S2, S3) umfasst und das Verfahren die folgenden Schritte aufweist:
- Speicherung von Kopien der Codewörter der codierten Kanäle (S1, S2, S3),
- Einsatz der Kopien zur Ermittlung von Zeitverschiebungen zwischen den periodischen Signalen und jedem empfangenen Codewort in einem Codewortsatz (C1, C2, C3), **gekennzeichnet durch**
- Teilung der Codewörter auf der Grundlage der ermittelten Zeitverschiebungen in einen ersten Teil und zweiten Teil, und
- Bildung neuer Codewörter (N1, N2, N3) **durch** den Austausch des ersten Teils und zweiten Teils eines jeden Codeworts untereinander, wodurch jedes der neuen Codewörter dieselbe Phase wie die des entsprechenden Kanals im periodischen Sigal hat.

2. Verfahren nach Anspruch 1, **gekennzeichnet durch** einen Schritt zur Mischung des periodischen Signals mit einer IF-Frequenz.

3. Verfahren nach Anspruch 2, **dadurch gekennzeichnet, dass** die IF-Frequenz 0 Hz beträgt.

4. Verfahren nach Anspruch 1, **dadurch gekennzeichnet, dass** das periodische Signal ein Codeteilungs-Vielfachzugriffs-Frequenzspreizungssignal ist.

5. Verfahren nach Anspruch 1, **gekennzeichnet durch** einen Schritt zur Korrelation des periodischen Signals mit den neuen Codewörtern.

6. Verfahren nach Anspruch 1, **dadurch gekennzeichnet, dass** das periodische Signal in zeitlichen Abständen empfangen und/oder verarbeitet wird.

7. Verfahren nach Anspruch 6, **dadurch gekennzeichnet, dass** der Abstand zumindest ein Abstand von einer Millisekunde alle 20 Millisekunden während der Ermittlung der Zeitverschiebung zwischen dem periodischen Signal und jedem der Codewörter in einem Codewörtersatz ist, und weniger als eine Millisekunde nach Erfassung der Zeitverschiebungen beträgt.

8. Vorrichtung zur Synchronisierung von codierten Kanälen (S1, S2, S3), wobei die Vorrichtung Mittel zum Empfang eines codierten Signals mit den codierten Kanälen (S1, S2, S3) und Speichermittel aufweist, wobei die Vorrichtung zur Speicherung von einer Vielzahl von Codewörtern (C1, C2, C3) in den Speichermitteln und zur Ermittlung von Zeitverschiebungen zwischen dem codierten Signal und der Vielzahl der Codewörter angeordnet ist, **dadurch gekennzeichnet, dass** die Vorrichtung zur Teilung jedes der Codewörter auf der Grundlage der ermittelten Zeitverschiebungen in einen ersten Teil und zweiten Teil, und zur Bildung von neuen Codewörtern (N1, N2, N3) durch den Austausch des ersten Teils und zweiten Teils untereinander angeordnet ist, wodurch jedes der neuen Codewörter dieselbe Phase wie die des entsprechenden Codes im codierten Sigal hat.

9. Vorrichtung nach Anspruch 8, wobei die Vorrichtung einen Mischer zur Mischung des codierten Signals mit einer IF-Frequenz von 0 Hz umfasst.

10. Vorrichtung nach Anspruch 8, wobei die Empfangsmittel nur in zeitlichen Abständen betriebsfähig sind.

11. Vorrichtung nach Anspruch 10, wobei der Abstand zumindest ein Abstand von einer Millisekunde alle 20 Millisekunden während der Ermittlung der Zeitverschiebung zwischen dem periodischen Signal und jedem der Codewörter in einem Codewörtersatz ist, und weniger als eine Millisekunde nach Erfassung der Zeitverschiebungen beträgt.

12. Vorrichtung nach Anspruch 8, wobei die Vorrichtung zur Korrelation des kodierten Signals mit dem neuen Codewort angeordnet ist.

13. Positionierungssystem mit einer Vorrichtung nach Anspruch 8.

## Revendications

1. Méthode de traitement des codes pour la synchronisation des canaux codés (S1, S2, S3) dans un signal périodique dans un récepteur, dans laquelle le signal périodique dit comprend des mots de code des canaux codés (S1, S2, S3), la méthode comprenant:
- stockage des répliques des mots de code des canaux codés (S1, S2, S3),
- utilisation des répliques pour déterminer des déplacements de temps entre le signal périodique et chaque mot de code reçu dans un jeu des mots de code (C1, C2, C3),
charactérisée par des étapes de
- division des mots de code en se basant sur les déplacements de temps déterminés en la partie première et la partie seconde; et
- formation des mots de code nouvels (N1, N2, N3) par échange de la partie première et la partie seconde de chaque mot de code à manière que chaque mot de code nouvel a la même phase que le canal correspondant dans le signal périodique.

2. Méthode selon la revendication 1, charactérisée par une étape de mélange du signal périodique avec une fréquence IF.

3. Méthode selon la revendication 2, charactérisée en ce que la fréquence IF est 0 Hz.

4. Méthode selon la revendication 1, charactérisée en ce que dit signal périodique est un signal à spectre étendu à accès multiple par répartition en code.

5. Méthode selon la revendication 1, charactérisée par une étape de corrélation du signal périodique dit avec des dits mots de code nouvels.

6. Méthode selon la revendication 1, charactérisée en ce que le signal périodique dit est reçu et/ou traité à intervalles.

7. Méthode selon la revendication 6, charactérisée en ce que l'intervalle dit est au moins un intervalle d'une milliseconde par chaque 20 millisecondes lors de la détermination des déplacements de temps entre le signal périodique et chaque mot de code dans un jeu des mots de code, et moins qu'une milliseconde àpres la détermination des déplacements de temps dits.

8. Dispositif pour la synchronisation des canaux codés (S1, S2, S3), le dispositif comprenant les moyens de réception d'un signal codé comprenant les canaux codés (S1, S2, S3) et des moyens de stockage, dit dispositif étant arrangé pour stocker plusieurs mots de code (C1, C2, C3) dans les moyens de stockage et pour déterminer des déplacements de temps entre le signal codé et plusieurs mots de code, charactérisée en ce que le dispositif est arrangé pour diviser des mots de code en se basant sur les déplacements de temps déterminés en la partie première et la partie seconde, et pour former des mots de code nouvels (N1, N2, N3) par échange de la partie première et la partie seconde à manière que chaque mot de code nouvel a la même phase que le code correspondant dans le signal codé.

9. Dispositif selon la revendication 8, dans lequel le dispositif comprend un mélangeur pour mélanger le signal codé avec une fréquence IF de 0 Hz.

10. Dispositif selon la revendication 8, dans lequel les moyens de réception sont opérable seulement à intervalles.

11. Dispositif selon la revendication 8, dans lequel l'intervalle dit est au moins un intervalle d'une milliseconde par chaque 20 millisecondes lors de la détermination des déplacements de temps entre le signal périodique et chaque mot de code dans un jeu des mots de code, et moins qu'une milliseconde àpres la détermination des déplacements de temps dits.

12. Dispositif selon la revendication 8, dans lequel le dispositif est arrangé pour faire la corrélation du signal codé avec dits mots de code nouvels.

13. Système de positionnement comprenant le dispositif selon la revendication 8.
